# EUROPÄISCHE PATENTANMELDUNG

(11) **EP 3 459 614 A1**
(43) Veröffentlichungstag der Anmeldung: **27.03.2019**
(21) Anmeldenummer: 17192623.1
(22) Anmeldetag: 22.09.2017
(51) Int. Cl.: B01D 45/08, F01D 25/32, F22B 37/30

(54) **DAMPFSIEB FÜR EINE DAMPFTURBINE**

(71) Anmelder: Siemens Aktiengesellschaft, 80333 München (DE)
(72) Erfinder: Bell, Ralf, 45478 Mülheim an der Ruhr (DE); Bergmann, Anett, 45527 Hattingen (DE); Bieniakonski, Christoph, 45128 Essen (DE); Busschulte, Marius, 46562 Voerde (DE); Ernst, Stephan, 46537 Dinslaken (DE); Kocdemir, Bora, 45357 Essen (DE); Legenbauer, Markus, 45279 Essen (DE); Maguire, Adam, 46147 Oberhausen (DE); Oehmichen, Michael, 45478 Mülheim an der Ruhr (DE); Ostwald, Daniel, 46047 Oberhausen (DE); Stanka, Ulrich, 45355 Essen (DE); Ulma, Andreas, 45481 Mülheim an der Ruhr (DE); van der Lest, Niclas, 45147 Essen (DE)

(57) **Zusammenfassung**

Die Erfindung betrifft ein Dampfsieb (8) mit einer Vielzahl von Sieböffnungen (9) zum Durchtritt von Dampf, die in einem die Siebfläche definierenden Siebmantel (10) des Dampfsiebes (8) ausgebildet sind, wobei das Dampfsieb ferner einen Einströmbereich (11) aufweist, der zum Anströmen eines Einströmdampfes ausgebildet ist, wobei der Einströmdampf aus einer Einströmrichtung (16) auf den Einströmbereich (11) trifft, wobei der Siebmantel (10) in einer Längsrichtung (19) ausgebildet ist, wobei die Gestalt der Sieböffnungen (9) über die Siebfläche betrachtet variiert, wobei die Sieböffnung (9) durch einen kreisförmigen Strömungskanal dargestellt ist und der Einlass des Strömungskanals wabenförmig ausgebildet ist.

## Beschreibung

Die Erfindung betrifft ein Dampfsieb mit einer Vielzahl von Sieböffnungen zum Durchtritt von Dampf, die in einem die Siebfläche definierenden Siebmantel des Dampfsiebes ausgebildet sind, wobei das Dampfsieb ferner einen Einströmbereich aufweist, der zum Einströmen eines Einströmdampfes ausgebildet ist, wobei der Einströmdampf aus einer Einströmrichtung auf den Einströmbereich trifft, wobei der Siebmantel in einer Längsrichtung ausgebildet ist, wobei die Gestalt der Sieböffnungen über die Siebfläche betrachtet variiert.

Desweiteren betrifft die Erfindung ein Verfahren zur Herstellung eines solchen Dampfsiebes.

Dampfsiebe werden beispielsweise in Ventilen in Dampfkraftwerken eingesetzt, wobei es vielfältige Ausführungen gibt, die im Stand der Technik bekannt sind. Anwendungen von Dampfsieben finden sich beispielsweise in Dampfströmungspassagen von Dampfturbinenanlagen, um in der betreffenden Dampfströmungspassage unerwünschte Fremdkörper abzufangen, so dass stromabwärts des Dampfsiebes nachfolgende Anlagenkomponenten vor Beschädigungen geschützt sind. Allerdings ist es bei den derzeitigen Dampfsieben nachteilig, dass eine Vergrößerung des Strömungswiderstandes der betreffenden Dampfströmungspassage einhergeht. Dadurch entsteht ein entsprechender Druckverlust infolge des Strömungswiderstandes, was zu einer Verringerung des Wirkungsgrades des Gesamtsystems führt.

Ein weiteres Problem beim Einsatz von Dampfsieben besteht darin, dass diese oftmals hohen Belastungen (zum Beispiel Schwingungsbelastungen oder Temperaturschwankungen) ausgesetzt sind, welche das Dampfsieb nach einer relativ kurzen Einsatzzeit schädigen oder sogar zerstören können.

In einem Schadensfall ist oftmals ein ganzheitlicher Ersatz von Dampfsieben erforderlich, was allerdings eine Erhöhung der Kosten und einer Erhöhung der Beschaffungszeit zur Folge hat.

Es wurde erkannt, dass Optimierungen möglich sind hinsichtlich Durchströmbarkeit und Strömungsführung. Allerdings ist die Umsetzbarkeit von besseren Strömungsführungen im Dampfsieb durch die eingeschränkte Umsetzbarkeit mittels traditioneller Fertigungsmethoden nicht möglich. Darüber hinaus ist das Strömungsverhalten in den Bereichen, wo die Dampfsiebe eingesetzt werden, sehr komplex, so dass in manchen Bereichen der Dampfsieboberfläche eine höhere Belastung und / oder ein anderer Anströmwinkel vorherrscht. Dies führt ebenfalls zu einer erhöhten Schadensbelastung.

Es ist bekannt, Dampfsiebe aus einem Zylinder zu fertigen, wobei Bohrungen auf der Oberfläche angeordnet werden. Bei einem anderen Design werden schmale teils gewellte Blechstreifen verwendet, um eine Siebfläche auszubilden.

Aufgabe der Erfindung ist es, ein Dampfsieb anzugeben, bei dem die Strömungsverluste möglichst gering sind.

Gelöst wird diese Aufgabe durch ein Dampfsieb mit einer Vielzahl von Sieböffnungen zum Durchtritt von Dampf, die in einem die Siebfläche definierenden Siebmantel des Dampfsiebes ausgebildet sind, wobei der Siebmantel eine über die Siebfläche betrachtet variierende Dicke besitzt, wobei das Dampfsieb ferner einen Einströmbereich aufweist, der zum Anströmen eines Einströmdampfes ausgebildet ist, wobei der Einströmdampf aus einer Einströmrichtung auf den Einströmbereich trifft, wobei der Siebmantel im Bereich des Einströmbereiches verdickt ausgeführt ist.

Gelöst wird diese Aufgabe durch ein Dampfsieb mit einer Vielzahl von Sieböffnungen zum Durchtritt von Dampf, die in einem die Siebfläche definierenden Siebmantel des Dampfsiebes ausgebildet sind, wobei das Dampfsieb ferner einen Einströmbereich aufweist, der zum Anströmen eines Einströmdampfes ausgebildet ist, wobei der Einströmdampf aus einer Einströmrichtung auf den Einströmbereich trifft, wobei der Siebmantel in einer Längsrichtung ausgebildet ist, wobei die Gestalt der Sieböffnungen über die Siebfläche betrachtet variiert, wobei die Sieböffnung durch einen kreisförmigen Strömungskanal dargestellt ist und der Einlass der Strömungskanäle wabenförmig ausgebildet ist.

Mit der Erfindung wird das Ziel verfolgt, die Einlässe der Strömungskanäle zu verbessern. Gemäß herkömmlichem Herstellungsverfahren war es bisher nur möglich, kreisförmige Einlässe herzustellen. Die Erfindung löst sich von diesem Ansatz und bietet eine konstruktive Änderung an, bei der die Einlässe wabenförmig ausgebildet sind.

Dadurch wird die nutzbare Fläche optimal ausgenutzt, da der Strömungseinlauf nicht mehr von einer runden Form konisch auf eine Bohrung übergeht, sondern von einer beispielsweise hexagonalen Form in den Strömungskanal verläuft. Da diese Übergänge strömungsoptimiert ausgeführt werden können, sind die Verluste weitestgehend minimiert. Dies kann beispielsweise durch Rundungen oder Ähnliches ausgeführt sein.

Vorteilhafte Weiterbildungen sind in den Unteransprüchen angegeben.

In einer ersten vorteilhaften Weiterbildung umfasst der Einlass sechs Kanten.

Dadurch ist eine Fläche des Dampfsiebes optimal ausgeführt, so dass möglichst wenig bzw. gar keine Totzonen entstehen.

Vorteilhafterweise werden hierbei zwei Kanten von zwei Einlässen derart ausgebildet, dass sie eine gemeinsame Kante bilden. Dadurch ist es möglich, die komplette Fläche des Dampfsiebes so auszubilden, dass ein Dampftröpfchen immer auf einen Einlass des Dampfsiebes trifft. In einer weiteren vorteilhaften Weiterbildung weisen die Strömungskanäle Auslässe auf, die ebenfalls wabenförmig ausgebildet sind. In einer weiteren vorteilhaften Weiterbildung können diese Auslässe die gleiche Geometrie aufweisen wie die Einlässe. Dadurch werden die Abströmverluste noch weiter minimiert. Durch den wabenförmigen Auslass entsteht ein Diffusor, welcher einen Druckrückgewinn ermöglicht.

In alternativen Ausführungsformen sind verschiedene Formen wie quadratische, trapezförmige oder jegliche N-Ecke möglich.

Die Strömungskanäle können jegliche Form aufweisen und müssen nicht zwangsläufig rund sein.

In einer weiteren vorteilhaften Weiterbildung werden die Strömungskanäle derart ausgebildet, dass sie den ankommenden Dampf in eine Längsrichtung des Siebmantels ablenken. Unter Längsrichtung ist im Wesentlichen eine Richtung senkrecht zur Anströmungsrichtung des Dampfes zu verstehen. Die Strömungskanäle werden hierbei zweckmäßigerweise von der Einströmungsrichtung im Wesentlichen umgelenkt. Dadurch werden die Strömungsverluste noch weiter minimiert.

In einer weiteren vorteilhaften Weiterbildung ist der Strömungskanal derart ausgebildet, dass ein in Umfangsrichtung um den Siebmantel strömender Dampf von einer Umfangsrichtung in eine radiale Richtung abgelenkt wird.

Mit dieser Maßnahme wird das Ziel verfolgt, einen Teil des einströmenden Dampfes, der beispielsweise rechts um das Dampfsieb strömt, die Möglichkeit zu eröffnen, in einen quasi schrägen Strömungskanal zu strömen, der in sich gekrümmt ist, damit nach dem Auslass der Dampf im Wesentlichen radial in einen Innenbereich des Ventils strömt.

Die auf das Verfahren hin gerichtete Aufgabe wird durch ein Herstellungsverfahren gelöst, wobei die Additive-Manufacturing-Methode eingesetzt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Gleiche Bauteile oder Bauteile mit gleicher Funktion sind dabei mit gleichen Bezugszeichen gekennzeichnet.

Es zeigen:
- Figur 1: eine Seitenansicht eines Dampfventils
- Figur 2: eine Draufsicht auf das Dampfventil
- Figur 3: eine Seitenansicht eines erfindungsgemäßen Dampfsiebes
- Figur 4: eine vergrößerte Darstellung eines Ausschnitts aus Figur 2
- Figur 5: eine Draufsicht auf das Dampfsieb
- Figur 6: eine Seitenansicht des Dampfsiebes
- Figur 7: eine Schnittdarstellung durch das Dampfsieb
- Figur 8: eine alternative Ausführungsform des Dampfsiebes

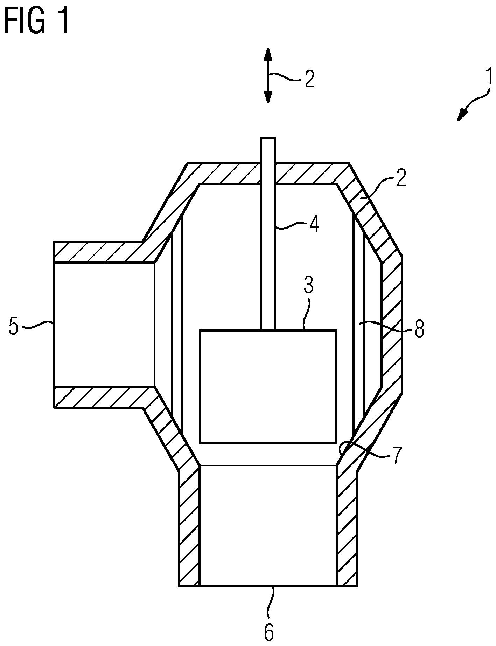

Die Figur 1 zeigt eine Seitenansicht eines Dampfventils 1. Das Dampfventil 1 umfasst im Wesentlichen ein Ventilgehäuse 2 und einen in einer Längsrichtung 2 verschieblich angeordneten Ventilkegel 3. Der Ventilkegel 3 ist mit einer Ventilspindel 4 verbunden. Ein Dampf strömt über einen Dampfeinlass 5 in das Ventilgehäuse 2 und wird nach einer im Wesentlichen 90-Grad-Umlenkung aus dem Dampfauslass 6 strömen. Wenn der Ventilkegel 3 nach oben bis zu einem Anschlag bewegt wird, ist das Dampfventil 1 komplett geöffnet. Wird der Ventilkegel 3 nach unten bis zu einem Ventilsitz 7 bewegt, ist das Dampfventil 1 komplett geschlossen. Damit keine Fremdpartikel durch das Dampfventil 1 strömen, ist ein Dampfsieb 8 um den Ventilkegel 3 angeordnet.

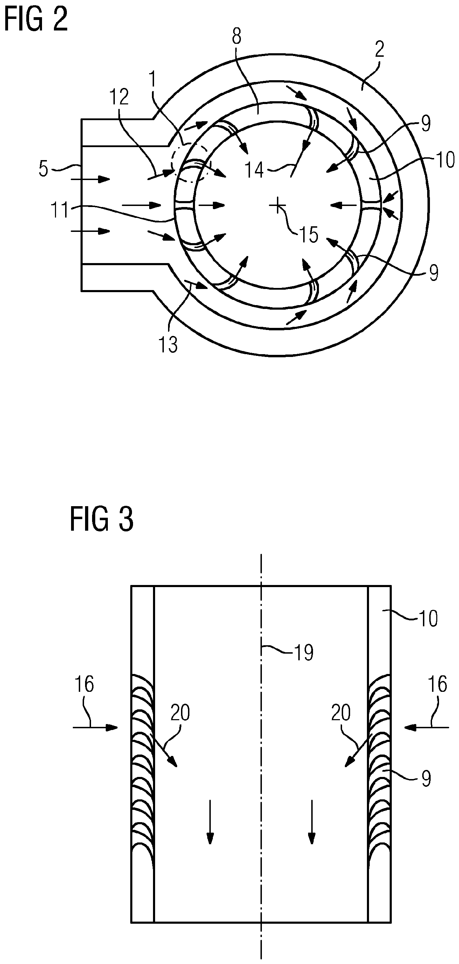

Die Figur 2 zeigt eine Draufsicht auf das Dampfventil 1. Das Dampfsieb 8 ist mit einer Vielzahl von Sieböffnungen 9 zum Durchtritt von Dampf ausgebildet, die in einem die Siebfläche definierenden Siebmantel 10 des Dampfsiebes 8 angeordnet sind.

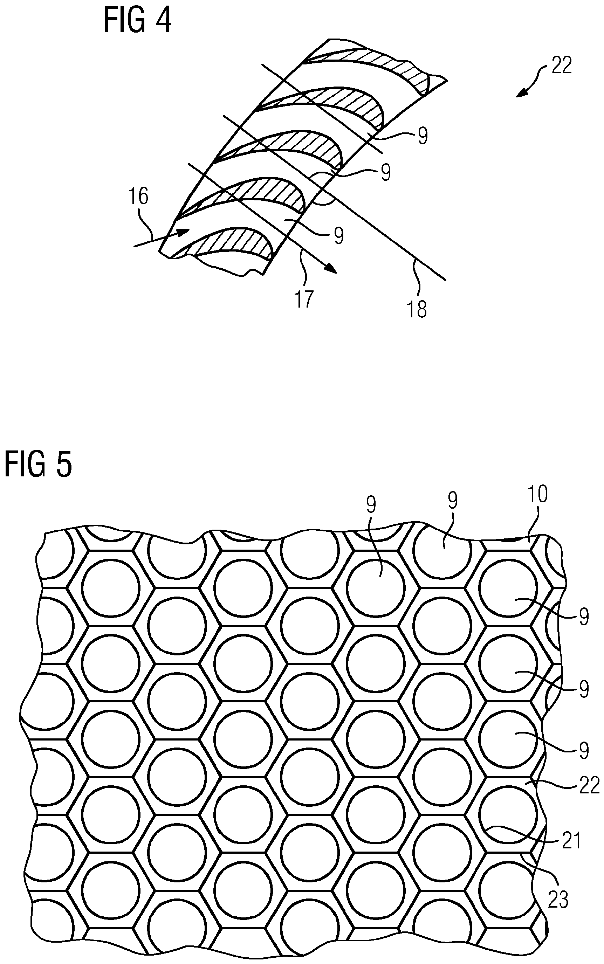

Aus Gründen der Übersichtlichkeit sind lediglich 2 Sieböffnungen mit dem Bezugszeichen 9 versehen. Ein im Dampfeinlass 5 einströmender Dampf trifft im Wesentlichen senkrecht auf einen Einströmbereich 11 des Dampfsiebes 8. Dort wird der einströmende Dampf in einen ersten Teilstrom 12 abgelenkt, der im Uhrzeigersinn um das Dampfsieb 8 strömt und in einen zweiten Teilstrom 13, der gegen den Uhrzeigersinn um das Dampfsieb 8 strömt. Der erste Teilstrom 12 strömt durch die Sieböffnungen 9, die derart gekrümmt ausgeführt sind, dass der Dampf nach dem Austritt aus der Sieböffnung 9 im Wesentlichen radial 14 in einen Dampfinnenraum 15 strömt. Die Sieböffnungen 9 können hierbei wie in Figur 4 dargestellt, die eine vergrößerte Darstellung mehrerer Sieböffnungen 9 gemäß dem Ausschnitt A aus Figur 2 darstellt, wie eine Düse ausgebildet sein. Wie dargestellt, wird eine Einströmrichtung 16 umgelenkt in eine Ausströmrichtung 17, die im Wesentlichen in eine Flächenorthogonale 18 gerichtet ist.

Die Figur 3 zeigt eine Seitenansicht des Siebmantels 10. Wie in Figur 3 zu sehen, wird die Einströmrichtung 16 noch weiter umgelenkt und zwar in eine Längsrichtung 19. Die Längsrichtung 19 entspricht im Wesentlichen der Richtung zum Dampfauslass 6. Die Ausströmrichtung 20 ist hierbei im Wesentlichen in Längsrichtung 19 gerichtet.

Die Figur 5 zeigt eine Draufsicht auf den Siebmantel 10. Die Sieböffnungen 9 sind in regelmäßigen Abständen zueinander ausgeführt. Aus Gründen der Übersichtlichkeit sind lediglich fünf Sieböffnungen mit dem Bezugszeichen 9 versehen.

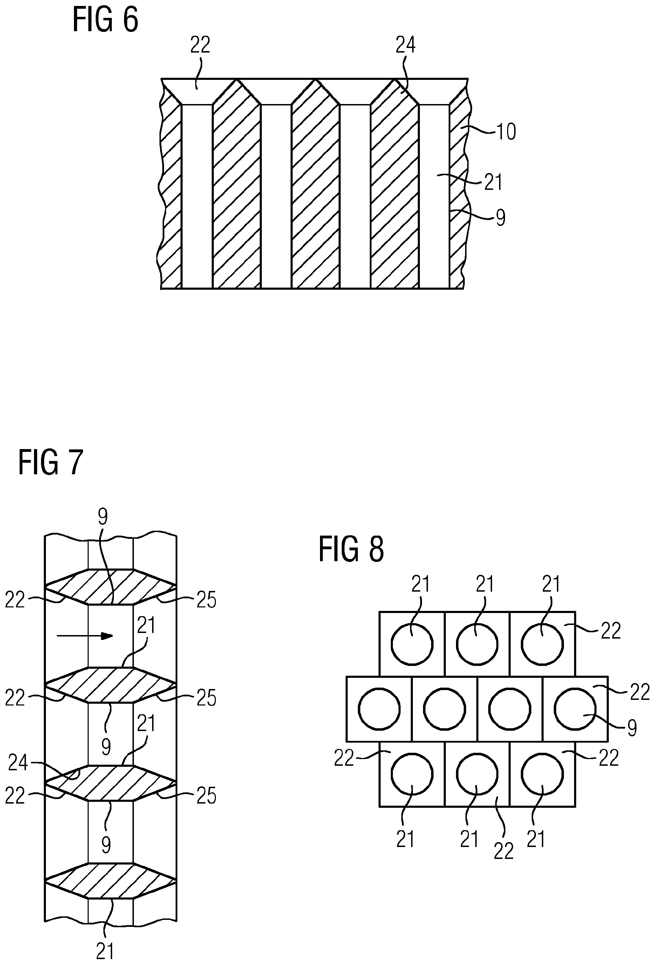

Die Figur 6 zeigt eine Querschnittsansicht des Siebmantels 10. Die Sieböffnung 9 weist einen kreisförmigen Strömungskanal 21 auf. Aus Gründen der Übersichtlichkeit ist lediglich ein Bezugszeichen 21 in der Figur 5 dargestellt. Die Sieböffnung 9 weist einen Einlass 22 auf. Der Einlass 22 ist nicht wie herkömmlich gefertigt kreisförmig, sondern wie in Figur 5 zu sehen, wabenförmig ausgeführt. Dabei entstehen sechs Kanten 23, die eine Wabe Figur 7 formen, wobei zwei Waben eine Kante 23 gemeinsam führen. Dadurch ist in der gesamten Fläche des Siebmantels 10 keine Totzone anzutreffen. Das bedeutet, dass ein auf den Siebmantel 10 auftreffender Dampf immer auf einen Einlass 22 trifft und dadurch schnell und dadurch ohne große Strömungsverluste in den Strömungskanal 21 strömt. In Figur 6 ist zu sehen, dass der Einlass 22 unter einem Wabenwinkel 24 ausgeführt ist, der bei ca. 45 Grad liegt. Andere Winkel sind je nach Geometrie der Sieböffnungen 9 und Größe der Einlässe 22 möglich.

Die Figur 7 zeigt eine Querschnittsansicht durch den Siebmantel 10. In der in Figur 7 dargestellten Ausführungsform ist der Wabenwinkel 24 bei ca. 70 Grad. Die Figur 7 zeigt lediglich eine schematische Querschnittsansicht des Siebmantels 10. Zusätzlich zu einem Einlass 22 weist die Sieböffnung 9 einen Auslass 25. Der Auslass 25 ist mehr oder weniger als Diffusor ausgebildet, so dass ein Druckrückgewinn entsteht und dadurch die Strömung optimiert ist. Dabei weist die Geometrie der Auslässe 25 die gleiche Geometrie wie die Einlässe 22. Die Auslässe 25 können auch andere strömungsoptimierte Formen annehmen. Die Sieböffnungen 9 bzw. Strömungskanäle 21 müssen nicht zwingend kreisförmig ausgebildet sein. Durch die Fertigung mit einem 3-D-Druck bzw. der Additive-Manufacturing-Methode sind beliebige Formen möglich. Eine einfache Form wäre beispielsweise eine viereckige Strömungs-öffnung.

Die Figur 8 zeigt eine alternative Ausführungsform der Einlässe 22. Hierbei wurden Vierecke als Ausführungsform für die Einlässe 22 gewählt. Auch hier entsteht keine Totzone und jedes Dampfteilchen, das auf den Siebmantel 10 trifft, wird auf einen Einlass 22 gelenkt und dadurch schnell in die Sieböffnungen 9 umgelenkt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Dampfsieb (8)
mit einer Vielzahl von Sieböffnungen (9) zum Durchtritt von Dampf, die in einem die Siebfläche definierenden Siebmantel (10) des Dampfsiebes (8) ausgebildet sind,
wobei das Dampfsieb (8) ferner einen Einströmbereich (11) aufweist, der zum Anströmen eines Einströmdampfes ausgebildet ist, wobei der Einströmdampf aus einer Einströmrichtung (16) auf den Einströmbereich (11) trifft,
wobei der Siebmantel (10) in einer Längsrichtung (19) ausgebildet ist,
wobei die Gestalt der Sieböffnungen (9) über die Siebfläche betrachtet variiert,
**dadurch gekennzeichnet, dass**
die Sieböffnung (9) durch einen kreisförmigen Strömungskanal dargestellt ist und der Einlass der Strömungskanäle wabenförmig ausgebildet ist.

2. Dampfsieb (8) nach Anspruch 1,
wobei der wabenförmige Einlass sechs Kanten aufweist.

3. Dampfsieb (8) nach Anspruch 2,
wobei zwei Kanten von zwei Einlässen eine gemeinsame Kante bilden.

4. Dampfsieb (8) nach Anspruch 1,2 oder 3,
wobei die Einlässe symmetrisch ausgeführt sind.

5. Dampfsieb (8) nach Anspruch 1,2 oder 3,
wobei die Strömungskanäle wabenförmige Auslässe aufweisen.

6. Dampfsieb (8) nach Anspruch 5,
wobei die Auslässe mit der gleichen Geometrie ausgeführt werden wie die Einlässe.

7. Dampfsieb (8) nach einem der vorhergehenden Ansprüche, wobei die Strömungskanäle derart ausgebildet sind, dass der Dampf in eine Längsrichtung des Siebmantels (10) abgelenkt wird.

8. Dampfsieb (8) nach Anspruch 7,
wobei Strömungskanäle derart ausgebildet sind, dass ein in Umfangsrichtung um den Siebmantel (10) strömender Dampf von einer Umfangsrichtung in eine radiale Richtung (14) umgelenkt wird.

9. Dampfsieb (8) nach Anspruch 7 oder 8,
wobei der Strömungskanal gekrümmt ausgeführt ist.

10. Verfahren zur Herstellung eines Dampfsiebes nach einem der Ansprüche 1 bis 9,
wobei der Siebmantel durch die Additive-Manufacturing-Methode hergestellt wird.
